# EUROPÄISCHE PATENTSCHRIFT

(11) **EP 1 951 558 B1**
(45) Veröffentlichungstag und Bekanntmachung des Hinweises auf die Patenterteilung: **29.12.2010**
(21) Anmeldenummer: 06806427.8
(22) Anmeldetag: 20.10.2006
(51) Int. Cl.: B60R 21/215

(54) **VERFAHREN ZUR ERZEUGUNG EINER SCHWÄCHUNGSZONE, INSBESONDERE EINER SOLLBRUCHLINIE FÜR EINE AIRBAG-AUSTRITTSÖFFNUNG, BAUTEIL UND VORRICHTUNG**
METHOD FOR PRODUCING A WEAKENED ZONE, IN PARTICULAR A PREDETERMINED BREAKING POINT FOR AN AIRBAG EXIT OPENING, COMPONENT AND APPARATUS
PROCEDE POUR PRODUIRE UNE ZONE D'AFFAIBLISSEMENT, EN PARTICULIER UNE ZONE DESTINEE A LA RUPTURE POUR UNE OUVERTURE DE SORTIE D'AIRBAG, ET COMPOSANT ET DISPOSITIF

(30) Priorität: 18.11.2005 DE 102005055553
(43) Veröffentlichungstag der Anmeldung: 06.08.2008
(73) Patentinhaber: Johnson Controls Interiors GmbH & Co. KG, 47929 Grefrath (DE)
(72) Erfinder: LIPPERT, Martin, 40667 Meerbusch (DE); RENNER, Dieter, 47906 Kempen (DE); HARNISCH, Hartmut, 47929 Grefrath (DE)
(74) Vertreter: Hemmelmann, Klaus
(86) Internationale Anmeldenummer: PCT/EP2006/010126
(87) Internationale Veröffentlichungsnummer: WO 2007/057084

(56) Entgegenhaltungen:
- EP-A- 1 219 405
- EP-A1- 0 593 783
- EP-B1- 0 991 551
- DE-A1- 4 113 633
- DE-A1- 10 122 312
- DE-A1- 10 128 746
- DE-A1- 10 229 962
- DE-A1- 19 945 022
- JP-A- 2 198 193
- JP-A- 4 289 038
- JP-A- 61 164 738

## Beschreibung

Die Erfindung betrifft ein Verfahren zur Erzeugung einer Schwächungszone, insbesondere einer Sollbruchlinie für eine Airbag-Austrittsöffnung, in einem sichtseitig mit einem Dekormaterial, insbesondere einem Lederdekor, ausgestatteten Trägerteil, ferner ein entsprechend bearbeitetes Bauteil sowie eine Vorrichtung zur Durchführung des Verfahrens.

### Stand der Technik

Ein gattungsgemäßes Verfahren und Bauteil sind aus der Druckschrift DE 102 60 988 A1 bekannt. Das Bauteil, beispielsweise eine Armaturentafel für ein Kraftfahrzeug, besteht aus einem flächigen Trägerteil, das sichtseitig mit einem textilen Dekormaterial überzogen ist. Um einem in der Armaturentafel angeordneten Airbag bei unfallbedingter Aktivierung die Entfaltung und den Durchtritt in den Fahrzeuginnenraum zu ermöglichen, ist die Armaturentafel mit einem vom Fahrzeuginnenraum her nicht sichtbaren Airbag-Austrittdeckel ausgestattet, welcher durch eine beispielsweise U-förmig umlaufende Schwächungslinie und einen Gelenkbereich im Trägerteil und dem Dekormaterial gebildet wird. Der sich entfaltende Airbag reißt den Airbag-Austrittsdeckel entlang der Schwächungslinie auf, wobei dieser um den Gelenkbereich herum zum Beispiel nach oben in Richtung der Windschutzscheibe schwenkt. Bei der Herstellung der Armaturentafel wird zuerst mittels eines Lasers eine Schwächung in Form einer linienartigen Anordnung von Sacklöchern in das textile Dekormaterial eingebracht, das nachfolgend unter Einbringung einer Schaumzwischenlage auf dem Trägerteil angeordnet wird. Anschließend wird eine zweite Schwächung deckungsgleich zur Schwächung des Dekormaterials am Trägerteil vorgenommen.

In der Druckschrift DE 199 44 371 A1 wird ein Verfahren zur Erzeugung einer unsichtbaren Sollbruchlinie in einem Lederdekor durch rückseitiges Bearbeiten mit einem Fräser offenbart. Auch bei diesem Verfahren muss die Schwächung des Trägerteils nach dem Aufbringen des Dekormaterial erfolgen.

In beiden Fällen sind somit zwei räumlich und zeitlich weit voneinander getrennte Bearbeitungsschritte erforderlich, um das betreffende Bauteil mit einer Schwächungszone zu versehen.

In der Druckschrift EP 0 991 551 B1 wird ferner ein Verfahren zur Erzeugung einer Schwächungslinie in einem Verbund aus Trägerteil und Dekormaterial beschrieben, bei welchem ein gepulster Laser hoher Leistung auf die Rückseite des Trägerteils auftrifft und bis in das Dekormaterial hinein sacklochartig Material abträgt. Dieses Verfahren ist rationell, führt aber nicht bei allen Dekormaterialien, insbesondere nicht bei Textil- oder Lederdekor, zu funktionell und/oder optisch befriedigenden Ergebnissen.

Document DE 19945022A1 zeitigt ein Verfahren gemaß der Präambel von Anspruch 1.

### Aufgabe

Der Erfindung liegt die Aufgabe zugrunde, ein wirtschaftliches Verfahren und eine geeignete Vorrichtung zur Einbringung von Schwächungslinien in einen Verbund aus einem Trägerteil und einem thermisch sensiblen Dekormaterial bereitzustellen.

### Lösung

Die Aufgabe wird bei einem gattungsgemäßen Verfahren dadurch gelöst, dass das Trägerteil unter Verwendung erster Mittel mit einer Schwächung versehen wird und durch die Schwächung des Trägerteils hindurch unter Verwendung weiterer Mittel eine Schwächung des Dekormaterials vorgenommen wird, wobei die Schwächung des Trägerteils spanend und die Schwächung des Dekormaterials durch einen Laser zeitnah, vorzugsweise gleichzeitig, erfolgen, also innerhalb eines Bearbeitungszyklusses.

Hierdurch ist es möglich, für die Bearbeitung von Trägerteil und Dekormaterial ohne Zeitverlust an einem Ort verschiedene Verfahren zu benutzen, die jeweils hinsichtlich der unterschiedlichen Werkstoffe von Trägerteil und Dekormaterial optimiert sind.

Die Schwächung im Trägerteil ist vorzugsweise als mindestens ein Durchbruch durch das Trägerteil ausgeführt und erfolgt durch abtragende Bearbeitung, insbesondere mittels eines Fräswerkzeugs oder eines Lasers. Dieses Vorgehen ermöglicht eine zügige Bearbeitung des meist relativ dickwandigen Trägerteils mit vergleichsweise einfachen Mitteln. Es ist natürlich auch denkbar, bei der Schwächung des Trägerteils eine Restwandung bestehen zu lassen, welche bei der nachfolgenden Bearbeitung des Dekormaterials problemlos überwunden wird.

Die Schwächung des Dekormaterials wird hingegen bevorzugt als mindestens eine in das Dekormaterial eindringende, dieses aber nicht durchdringende Ausnehmung ausgeführt, beispielsweise als linienförmige Anordnung von Sacklöchern. Dies schließt nicht aus, dass in bestimmten Abständen Ausnehmungen mit Mikrodurchbrüchen vorgesehen sind, welche als Referenz für den Betrieb eines Bearbeitungslasers dienen. Die Ausnehmungen werden mit Vorteil durch rückseitige Bearbeitung des Dekormaterials mit einem Carbondioxid-Laser oder Erbium-YAK-Laser erzeugt. Da der Laser nicht der Bearbeitung des Trägerteils dient, kann er mit einer so geringen Leistung ausgelegt werden, dass die Investitionskosten erheblich reduziert und die Gefahr eines Durchbrennens des Sacklochs bis zur Sichtseite des Dekormaterials minimiert werden.

Der Laser kann dabei durch das Werkzeug zur spanenden oder abtragenden Bearbeitung des Trägerteils, insbesondere das Fräswerkzeug oder den zuvor genannten anderen Laser, hindurch zum Dekormaterial geführt wird. Alternativ ist denkbar, den Laser am Werkzeug zur spanenden oder abtragenden Bearbeitung des Trägerteils, insbesondere dem Fräswerkzeug oder dem anderen Laser, vorbei zum Dekormaterial zu leiten.

Das erfindungsgemäß zu behandelnde Bauteil kann eine zwischen Trägerteil und Dekormaterial angeordnete Schaumschicht aufweisen, welche diese miteinander verbindet und die Haptik des Bauteils aufwertet. In diesem Fall ist es vorteilhaft, den Durchbruch durch das Trägerteil bis in die Schaumschicht zu führen, während die verbleibende Dicke der Schaumschicht sowie das Dekormaterial mittels Laser geschwächt werden.

Eine Vorrichtung zur Durchführung der zuvor beschriebenen Verfahren weist vorzugsweise eine Antriebseinrichtung zum Betreiben eines spanenden Werkzeugs, eine Laserquelle und eine Einrichtung zur Zuführung des Lasers in den Arbeitsbereich des spanenden Werkzeugs auf. Das spanende Werkzeug kann dabei beispielsweise von einem Industrieroboter entlang der gewünschten Schwächungszone geführt werden, während der mittels eines flexiblen Lichtleiters mitgeführte Laserstahl näherungsweise zeitgleich zur spanenden Bearbeitung des Trägerteils die Schwächung des Dekormaterials vornimmt.

Das spanende Werkzeug kann als mit einer Längsbohrung versehener Fingerfräser ausgebildet werden, durch welche hindurch der Laser auf die Rückseite des Dekormaterials führbar ist. Ferner könnte ein mit sekantenartigen Bohrungen versehener Scheibenfräser verwendet werden, durch welche hindurch der Laser führbar ist.

Alternativ wird vorgeschlagen, den Laser am spanenden Werkzeug vorbei auf die Rückseite des Dekormaterials zu leiten.

Ferner ist denkbar, dass die Vorrichtung zur Durchführung des erfindungsgemäßen Verfahrens eine ersten und eine zweiten Laserquelle aufweist, wobei der erste, vorzugsweise leistungsschwächere Lasers in den Arbeitsbereich des zweiten, vorzugsweise leistungsstärkeren Lasers geführt wird.

### Figuren

Die Figuren stellen beispielhaft und schematisch verschiedene Ausführungen der Erfindung dar.

Es zeigen:
- Fig. 1: eine Aufsicht auf eine erfindungsgemäß bearbeitete Armaturentafel für ein Kraftfahrzeug,
- Fig. 2: einen Schnitt A-A durch die Armaturentafel quer zur Sollbruchlinie,
- Fig. 3: die Erzeugung der Sollbruchlinie im Schnitt A-A unter Anwendung einer ersten erfindungsgemäßen Vorrichtung,
- Fig. 4: einen Schnitt B-B entlang der Sollbruchlinie nach Fig. 3 und 4,
- Fig. 5: einen Schnitt B-B unter Erzeugung der Sollbruchlinie mit einer anderen Vorrichtung,
- Fig. 6: eine weitere Vorrichtung zur Erzeugung der Sollbruchlinie im Schnitt B-B,
- Fig. 7: eine andere erfindungsgemäße Vorrichtung zur Durchführung des erfindungsgemäßen Verfahrens.

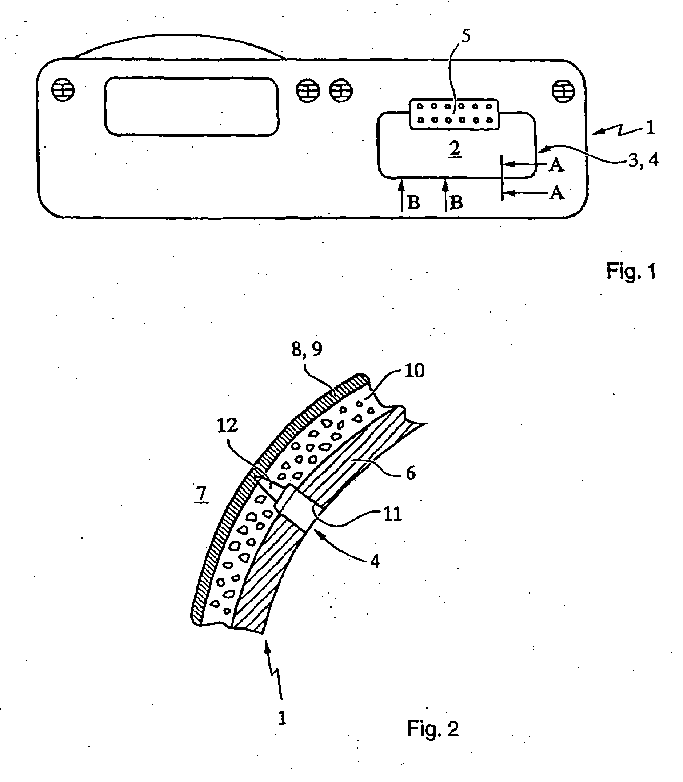

Die in Fig. 1 abgebildete Armaturentafel 1 ist beifahrerseitig mit einem Airbag-Austrittsdeckel 2 ausgestattet, der durch eine Schwächungszone 3 in Form einer U-förmig umlaufenden Sollbruchlinie 4 und einen Gelenkbereich 5 umgrenzt wird. Sollbruchlinie 4 und Gelenkbereich 5 sind vom Fahrzeuginnenraum her nicht sichtbar, so dass der Airbag-Austrittsdeckel insgesamt (von einer SRS-Kennung abgesehen) als solcher vor der Entfaltung des Airbags nicht erkennbar ist.

Wie aus dem Schnitt nach Fig. 2 ersichtlich, besteht die Armaturentafel 1 aus einem relativ dickwandigen Trägerteil 6 aus spritzgegossenem oder gepresstem Kunststoff, welches zum Fahrzeuginnenraum 7 hin mit einem Dekormaterial 8 in Form eines Lederdekors 9 abgedeckt ist. Zwischen Lederdekor 9 und Trägerteil 6 befindet sich eine Schaumschicht 10 aus Polyurethanschaum, welche Lederdekor 9 und Trägerteil 6 miteinander verbindet.

Die Sollbruchlinie 4 besteht aus einer ersten Schwächung in Form von Durchbrüchen 11 im Trägerteil 6 und einer zweiten Schwächung, die aus sacklochartigen Ausnehmungen 12 im Lederdekor 9 besteht. Die Durchbrüche 11 reichen bis in die Schaumschicht 10 hinein. Die Sichtfläche des Lederdekors 9 hingegen wird von den Ausnehmungen 12 nicht durchdrungen, so dass die Sollbruchlinie 4 vom Fahrzeuginnenraum 7 her unsichtbar ist.

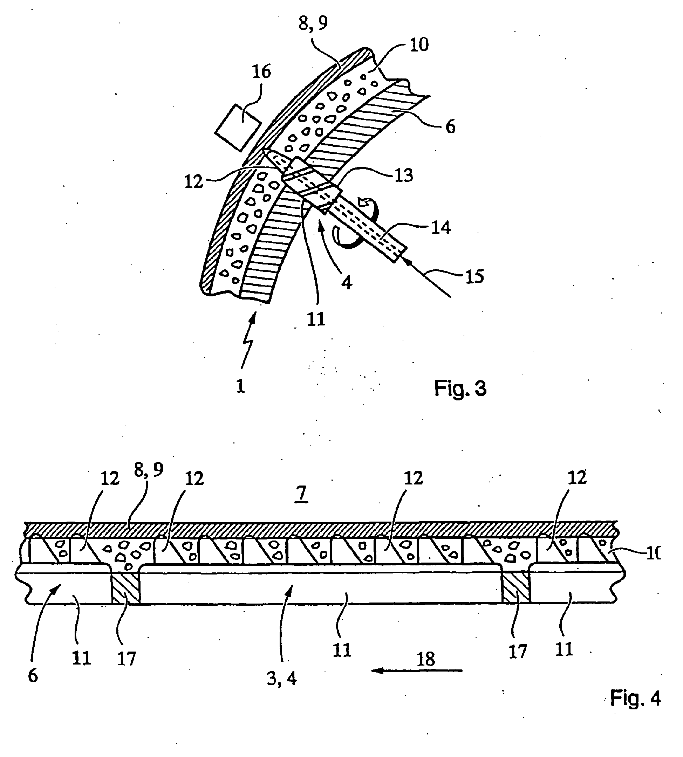

Zur Erzeugung der Sollbruchlinie 4 wird, wie in Fig. 3 gezeigt, ein rotierender Fingerfräser 13 entlang der Schwächungszone 3 durch das Trägerteil 6 und einen Teil der Schaumschicht 10 geführt und trägt dort zur Einbringung des linienförmig Durchbruchs 11 spanend Werkstoff ab. Der Fingerfräser 13 ist entlang seiner Längsachse mit einer Bohrung 14 versehen, durch welche während des Fräsvorgangs ein gepulster Laser (Laserstrahl 15) zur verbleibenden Schaumschicht 10 und das Lederdekor 9 geführt wird. Der Laser verdampft mit jedem Puls Werkstoff aus Schaumschicht 10 und Lederdekor 9, ebenso gegebenenfalls vorhandene Stäube aus der Bearbeitung des Trägerteils 6. Ein Sensor 16 misst dabei die zunehmende Intensität des durch den Restquerschnitt des Lederdekors 9 durchscheinenden Laserstrahls 15 und schaltet den Laser ab, bevor die Ausnehmung 12 zur Sichtseite durchbricht oder Farbveränderungen durch die (vergleichsweise niedrige) thermische Belastung des Lederdekors 9 sichtbar werden.

Da die Verbindung des Airbag-Austrittsdeckels 2 mit der übrigen Armaturentafel 1 eine gewisse Festigkeit erfordert, sind die gefrästen Durchbrüche 11 von Stegen 17 unterbrochen, mittels derer das Trägerteil 6 den Airbag-Austrittsdeckel 2 unmittelbar mit der Armaturentafel 1 verbindet (Fig. 4). Beim kontinuierlichen Vorschub des Fingerfräsers 13 entlang der Sollbruchlinie 4 mit einer Vorschubgeschwindigkeit von etwa 50 bis 100 mm/min hebt dieser in bestimmten Abständen von der Armaturentafel 1 ab und taucht nachfolgend wieder in das Trägerteil 6 ein. Der in der Zwischenzeit unbearbeitete Bereich des Trägerteils 6 bildet nachfolgend die Stege 17 aus. Durch den Vorschub des Fingerfräsers 13 (Pfeil 18) trifft auch der pulsierende Laserstrahl 15 während der Erzeugung der Ausnehmungen 12 entlang der Sollbruchlinie 4 versetzt auf das Lederdekor 9 auf. Die Ausnehmungen 12 weisen daher, wie im Schnitt entlang der Sollbruchlinie 4 nach Fig. 4 ersichtlich, keine rotationssymmetrische Kontur auf, sondern sind zägezahnartig ausgebildet. Die Anwendung des Fingerfräsers 13 empfiehlt sich insbesondere für die Erzeugung bogenartig umlaufende Schwächungszonen 3, beispielsweise im Eckbereich des Airbag-Austrittsdeckels 2.

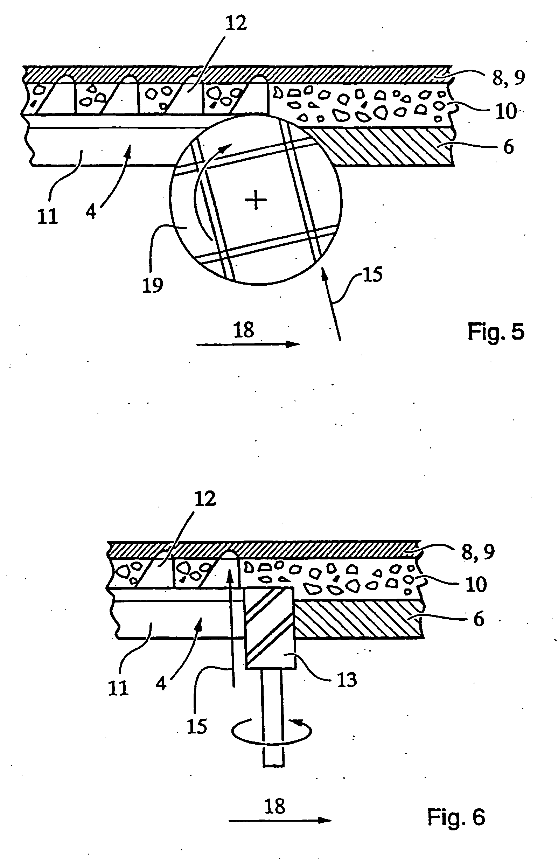

Wie in Fig. 5 gezeigt, kann die spanende Bearbeitung auch mittels eines Scheibenfräsers 19 erfolgen, in welchen sekantenartige Bohrungen 14 eingebracht sind. In vorgegebenen Drehstellungen des Scheibenfräsers 19 kann der mit dem Scheibenfräser synchronisierte Laserstrahl 15 durch die Bohrungen 14 hindurch bis auf das Lederdekor 9 geführt werden. Unter Verwendung des Scheibenfräsers 19 werden vorzugsweise geradlinig verlaufende Sollbruchlinien 4 erzeugt.

In Fig. 6 ist eine Vorrichtung bei der Bearbeitung der Armaturentafel 1 dargestellt, bei welcher der Laserstrahl 15 am rotierenden Fingerfräser 13 vorbei und durch den bereits gefrästen Durchbruch 11 hindurch in Richtung des Lederdekors 9 geführt wird, wobei Fingerfräser 13 und Laserstrahl 15 im Ausführungsbeispiel äquidistant in Richtung des Pfeils 18 vorwärts bewegt werden. Grundsätzlich ist natürlich auch denkbar, den Laserstrahl 15 während der Erzeugung jeder Ausnehmung 12 fest zu positionieren und dann dem bereits vorausbewegten Fingerfräser 13 nacheilen zu lassen.

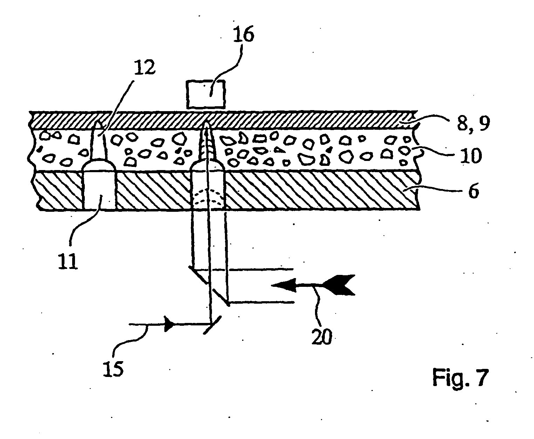

Wie aus Fig. 7 ersichtlich, kann die Bearbeitung des Trägerteils 6 auch mittels eines leistungsstarken Lasers (Laserstrahl 20) erfolgen. Im Ausführungsbeispiel treffen beide Laserstrahlen 15, 20 an einem gemeinsamen Arbeitsort auf das Trägerteil 6 auf und tragen den Werkstoff zur Erzeugung der bohrungsartigen Durchbrüche 12 gemeinsam ab. Nach einer zuvor experimentell ermittelten Bearbeitungszeit ist der Durchbruch 11 geschaffen, so dass der leistungsstarke Laserstrahl 20 abgeschaltet werden kann und die Bearbeitung des Lederdekors 9 durch den Durchbruch 11 hindurch nur noch durch den leistungsschwächeren Laserstrahl 15 erfolgt. Es ist selbstverständlich möglich, den leistungsschwachen Laserstrahl 15 erst dann zuzuschalten, wenn der Durchbruch 11 bereits vom leistungsstärkeren Laserstrahl 20 geschaffen wurde. Ferner ist denkbar, die Laserstrahlen 15, 20 nebeneinander arbeiten zu lassen, wobei der leistungsstarke Laserstrahl 20 das Trägerteil 6 bearbeitet, während der leistungsschwächere Laserstrahl 15 durch den kurz zuvor geschaffenen Durchbruch 11 Werkstoff aus dem Lederdekor 9 abträgt.

### Bezugszeichen

- 1: Armaturentafel
- 2: Airbag-Austrittsdeckel
- 3: Schwächungszone
- 4: Sollbruchlinie
- 5: Gelenkbereich
- 6: Trägerteil
- 7: Fahrzeuginnenraum
- 8: Dekormaterial
- 9: Lederdekor
- 10: Schaumschicht
- 11: Durchbruch
- 12: Ausnehmung
- 13: Fingerfräser
- 14: Bohrung
- 15: Laserstrahl
- 16: Sensor
- 17: Steg
- 18: Pfeil (Vorschub des spanenden Werkzeugs)
- 19: Scheibenfräser
- 20: Laserstrahl

## Patentansprüche

1. Verfahren zur Erzeugung einer Schwächungszone (3) in einem sichtseitig mit einem Dekormaterial (8), insbesondere einem Lederdekor (9), ausgestatteten Trägerteil (6), wobei das Trägerteil unter Verwendung erster Mittel mit einer Schwächung versehen wird und durch die Schwächung des Trägerteils hindurch unter Verwendung anderer Mittel eine Schwächung des Dekormaterials vorgenommen wird, **dadurch gekennzeichnet, dass** die Schwächung des Trägerteils (6) durch spanende Bearbeitung und die Schwächung des Dekormaterials (8) durch Laser vorgenommen werden und zeitnah erfolgen.

2. Verfahren nach Anspruch 1, **dadurch gekennzeichnet, dass** die Schwächung des Trägerteils (6) und die Schwächung des Dekormaterials (8) gleichzeitig erfolgen.

3. Verfahren nach Anspruch 1 oder 2, **dadurch gekennzeichnet, dass** die Schwächungszone als Sollbruchlinie (4) für eine Airbag-Austrittsöffnung ausgebildet wird.

4. Verfahren nach Anspruch 1 bis 3, **dadurch gekennzeichnet, dass** die Schwächung im Trägerteil (6) als mindestens ein Durchbruch (11) durch das Trägerteil (6) ausgeführt wird.

5. Verfahren nach einem der vorhergehenden Ansprüche, **dadurch gekennzeichnet, dass** die spanende Bearbeitung des Trägerteils (6) mittels eines Fräswerkzeugs erfolgt.

6. Verfahren nach einem der vorhergehenden Ansprüche, **dadurch gekennzeichnet, dass** die Schwächung des Dekormaterials (8) als mindestens eine in das Dekormaterial eindringende, dieses vorzugsweise nicht durchdringende Ausnehmung (12) ausgeführt wird.

7. Verfahren nach Anspruch 6, **dadurch gekennzeichnet, dass** die Ausnehmungen (12) im Dekormaterial (8) als linienförmige Anordnung von Sacklöchern ausgebildet sind.

8. Verfahren nach einem der vorhergehenden Ansprüche, **dadurch gekennzeichnet, dass** die Schwächung des Dekormaterials (8) durch Bearbeitung mit einem Carbondioxid (CO₂)-Laser oder Erbium-YAK-Laser erfolgt.

9. Verfahren nach Anspruch 8, **dadurch gekennzeichnet, dass** der Laser durch das Werkzeug zur spanenden oder abtragenden Bearbeitung des Trägerteils (6), insbesondere das Fräswerkzeug, hindurch zum Dekormaterial (8) geführt wird.

10. Verfahren nach Anspruch 8, **dadurch gekennzeichnet, dass** der Laser am Werkzeug zur spanenden oder abtragenden Bearbeitung des Trägerteils (6), insbesondere dem Fräswerkzeug oder anderen Laser, vorbei zum Dekormaterial (8) geführt wird.

11. Verfahren nach einem der Ansprüche 4 bis 10, **dadurch gekennzeichnet, dass** der Durchbruch (11) durch das Trägerteil (6) bis in eine zwischen Trägerteil und Dekormaterial (8) befindliche Schaumschicht (10) geführt wird.

12. Bauteil, insbesondere Innenverkleidungsteil für ein Kraftfahrzeug, mit einem Trägerteil (6), welches sichtseitig mit einem Dekormaterial (8) ausgestattet ist, hergestellt nach einem Verfahren nach einem der vorhergehenden Ansprüche.

13. Bauteil nach Anspruch 12, **dadurch gekennzeichnet, dass** das Dekormaterial als Lederdekor (9) ausgebildet ist.

14. Vorrichtung zur Durchführung des Verfahren nach einem der Ansprüche 1 bis 11, mit einer Antriebseinrichtung zum Betreiben eines spanenden Werkzeugs, einer Laserquelle und einer Einrichtung zur Zuführung des Lasers (Laserstrahl 15) in den Arbeitsbereich des spanenden Werkzeugs.

15. Vorrichtung nach Anspruch 14, **dadurch gekennzeichnet, dass** das spanende Werkzeug als mit einer Längsbohrung versehener Fingerfräser (13) ausgebildet ist, durch welche hindurch der Laser (Laserstrahl 15) führbar ist.

16. Vorrichtung nach Anspruch 14, **dadurch gekennzeichnet, dass** das spanende Werkzeug als mit sekantenartigen Bohrungen versehener Scheibenfräser (19) ausgebildet ist, durch welche hindurch der Laser (Laserstrahl 15) führbar ist.

17. Vorrichtung nach Anspruch 14, **dadurch gekennzeichnet, dass** der Laser (Laserstrahl 15) am spanenden Werkzeug vorbei führbar ist.

## Claims

1. Method for producing a weakened zone (3) in a carrier part (6) which is equipped on the visible side with a decorative material (8), in particular a leather decoration (9), wherein the carrier part is provided with a weakened section using first means, and weakening of the decorative material is performed through the weakened section of the carrier part using other means, **characterized in that** the weakening of the carrier part (6) is performed by machining by cutting and the weakening of the decorative material (8) is performed by laser and said weakenings take place temporally close to one another.

2. Method according to Claim 1, **characterized in that** the weakening of the carrier part (6) and the weakening of the decorative material (8) take place at the same time.

3. Method according to Claim 1 or 2, **characterized in that** the weakened zone is configured as a predetermined breaking point (4) for an airbag exit opening.

4. Method according to Claims 1 to 3, **characterized in that** the weakening in the carrier part (6) is configured as at least one opening (11) through the carrier part (6).

5. Method according to one of the preceding claims, **characterized in that** the machining by cutting of the carrier part (6) takes place by means of a milling tool.

6. Method according to one of the preceding claims, **characterized in that** the weakening of the decorative material (8) is configured as at least one recess (12) entering the decorative material but preferably not penetrating right through said decorative material.

7. Method according to Claim 6, **characterized in that** the recesses (12) in the decorative material (8) are configured as a linear arrangement of blind holes.

8. Method according to one of the preceding claims, **characterized in that** the weakening of the decorative material (8) takes place by machining with a carbon dioxide (CO₂) laser or an erbium YAK laser.

9. Method according to Claim 8, **characterized in that** the laser is guided through the tool for the machining of the carrier part (6) by cutting or removing material, in particular the milling tool, as far as the decorative material (8).

10. Method according to Claim 8, **characterized in that** the laser is guided past the tool for the machining of the carrier part (6) by cutting or removing material, in particular the milling tool or other laser, as far as the decorative material (8).

11. Method according to one of Claims 4 to 10, **characterized in that** the opening (11) is guided through the carrier part (6) until into a foam layer (10) located between the carrier part and the decorative material (8).

12. Component, in particular an inner cladding part for a motor vehicle, with a carrier part (6) equipped on the visible side with a decorative material (8), produced according to a method according to one of the preceding claims.

13. Component according to Claim 12, **characterized in that** the decorative material is configured as a leather decoration (9).

14. Apparatus for carrying out the method according to one of Claims 1 to 11, with a drive device for operating a cutting tool, a laser source and a device for guiding the laser (laser beam 15) into the working region of the cutting tool.

15. Apparatus according to Claim 14, **characterized in that** the cutting tool is configured as an end milling cutter (13) provided with a longitudinal bore, through which the laser (laser beam 15) may be guided.

16. Apparatus according to Claim 14, **characterized in that** the cutting tool is configured as a side milling cutter (19) provided with secant-like bores, through which the laser (laser beam 15) may be guided.

17. Apparatus according to Claim 14, **characterized in that** the laser (laser beam 15) may be guided past the cutting tool.

## Revendications

1. Procédé pour produire une zone d'affaiblissement (3) dans une partie de support (6) garnie du côté visible d'un matériau de décoration (8), en particulier d'un décor en cuir (9), dans lequel la partie de support est dotée d'un affaiblissement en utilisant des premiers moyens et un affaiblissement du matériau de décoration est opéré à travers l'affaiblissement de la partie de support en utilisant d'autres moyens, **caractérisé en ce que** l'affaiblissement de la partie de support (6) est effectué par usinage avec enlèvement de copeaux et l'affaiblissement du matériau de décoration (8) est effectué par laser et ils sont effectués de façon rapprochée dans le temps.

2. Procédé selon la revendication 1, **caractérisé en ce que** l'affaiblissement de la partie de support (6) et l'affaiblissement du matériau de décoration (8) sont effectués simultanément.

3. Procédé selon la revendication 1 ou 2, **caractérisé en ce que** la zone d'affaiblissement est réalisée sous la forme d'une zone destinée à la rupture (4) pour une ouverture de sortie d'airbag.

4. Procédé selon une revendication 1 à 3, **caractérisé en ce que** l'affaiblissement dans la partie de support (6) est réalisé sous la forme d'au moins une trouée (11) à travers la partie de support (6).

5. Procédé selon l'une quelconque des revendications précédentes, **caractérisé en ce que** l'usinage avec enlèvement de copeaux de la partie de support (6) est effectué au moyen d'un outil de fraisage.

6. Procédé selon l'une quelconque des revendications précédentes, **caractérisé en ce que** l'affaiblissement du matériau de décoration (8) est réalisé sous la forme d'au moins un évidement (12) pénétrant dans le matériau de décoration mais ne le traversant de préférence pas.

7. Procédé selon la revendication 6, **caractérisé en ce que** les évidements (12) dans le matériau de décoration (8) se présentent sous la forme d'un agencement linéaire de trous borgnes.

8. Procédé selon l'une quelconque des revendications précédentes, **caractérisé en ce que** l'affaiblissement du matériau de décoration (8) est réalisé par usinage avec un laser au dioxyde de carbone (CO₂) ou un laser Erbium-YAG.

9. Procédé selon la revendication 8, **caractérisé en ce que** le laser est guidé jusqu'au matériau de décoration (8) à travers l'outil d'usinage par enlèvement de copeaux ou par taille de la partie de support (6), en particulier l'outil de fraisage.

10. Procédé selon la revendication 8, **caractérisé en ce que** le laser est guidé le long de l'outil d'usinage par enlèvement de copeaux ou par taille de la partie de support (6), en particulier le long de l'outil de fraisage ou d'un autre laser, vers le matériau de décoration (8).

11. Procédé selon l'une quelconque des revendications 4 à 10, **caractérisé en ce que** la trouée (11) à travers la partie de support (6) est menée jusque dans une couche de mousse (10) se trouvant entre la partie de support et le matériau de décor (8).

12. Composant, en particulier pièce d'habillage intérieur pour un véhicule à moteur, avec une partie de support (6), qui est garnie du côté visible d'un matériau de décoration (8), fabriqué selon l'une quelconque des revendications précédentes.

13. Composant selon la revendication 12, **caractérisé en ce que** le matériau de décoration est réalisé sous la forme d'un décor en cuir (9).

14. Dispositif pour la mise en oeuvre du procédé selon l'une quelconque des revendications 1 à 11, avec un dispositif d'entraînement pour entraîner un outil d'usinage par enlèvement de copeaux, une source laser et un dispositif pour amener le laser (faisceau laser 15) dans la zone de travail de l'outil d'usinage par enlèvement de copeaux.

15. Dispositif selon la revendication 14, **caractérisé en ce que** l'outil d'usinage par enlèvement de copeaux se présente sous la forme d'une fraise à queue (13), présentant un alésage longitudinal à travers lequel le laser (faisceau laser 15) peut être guidé.

16. Dispositif selon la revendication 14, **caractérisé en ce que** l'outil d'usinage par enlèvement de copeaux est réalisé sous la forme d'une fraise disque (19) pourvue d'alésages sécants, à travers lesquels le laser (faisceau laser 15) peut être guidé.

17. Dispositif selon la revendication 14, **caractérisé en ce que** le laser (faisceau laser 15) peut être guidé le long de l'outil d'usinage par enlèvement de copeaux.
